# EUROPÄISCHE PATENTSCHRIFT

(11) **EP 1 237 691 B1**
(45) Veröffentlichungstag und Bekanntmachung des Hinweises auf die Patenterteilung: **30.03.2005**
(21) Anmeldenummer: 00987069.2
(22) Anmeldetag: 31.10.2000
(51) Int. Cl.: B28D 5/00, B24B 57/00, B01D 21/01, B01D 21/26

(54) **VERFAHREN ZUM FRAKTIONIEREN EINER ZERSPANUNGSSUSPENSION**
METHOD FOR SEPARATING A MACHINING SUSPENSION INTO FRACTIONS
PROCEDE POUR FRACTIONNER UNE SUSPENSION PRODUITE LORS DE L'USINAGE PAR ENLEVEMENT DE COPEAUX

(30) Priorität: 14.12.1999 DE 19960380
(43) Veröffentlichungstag der Anmeldung: 11.09.2002
(73) Patentinhaber: Fraunhofer-Gesellschaft zur Förderung der angewandten Forschung e.V., 80686 München (DE)
(72) Erfinder: EISNER, Peter, 85354 Freising (DE); MALBERG, Andreas, 80636 München (DE); MENNER, Michael, 82223 Eichenau (DE); BORCHERDING, Axel, 80937 München (DE)
(86) Internationale Anmeldenummer: PCT/DE2000/003858
(87) Internationale Veröffentlichungsnummer: WO 2001/043933

(56) Entgegenhaltungen:
- EP-A- 0 786 317
- US-A- 3 997 359
- PATENT ABSTRACTS OF JAPAN vol. 1997, no. 08, 29. August 1997 (1997-08-29) -& JP 09 109144 A (MITSUBISHI MATERIALS CORP), 28. April 1997 (1997-04-28)
- PATENT ABSTRACTS OF JAPAN vol. 1997, no. 08, 29. August 1997 (1997-08-29) -& JP 09 109145 A (MITSUBISHI MATERIALS CORP), 28. April 1997 (1997-04-28)
- PATENT ABSTRACTS OF JAPAN vol. 1996, no. 06, 28. Juni 1996 (1996-06-28) -& JP 08 039430 A (MITSUBISHI MATERIALS CORP), 13. Februar 1996 (1996-02-13)

## Beschreibung

### Technisches Anwendungsgebiet

Die Erfindung betrifft ein Verfahren zum Fraktionieren einer Zerspanungssuspension, wie sie insbesondere bei der mechanischen Bearbeitung von Silizium, Quarz oder Keramik anfällt. Eine gebrauchte Zerspanungssuspension besteht in der Regel aus einem Kühlschmierstoff, in dem Schneidkorn sowie der Abrieb eines Bearbeitungswerkzeuges bzw. einer Bearbeitungsmaschine und des bearbeiteten Materials dispergiert sind.

Derartige Zerspanungssuspensionen werden beispielsweise bei der Herstellung dünner Scheiben aus Silizium oder Quarz für die Halbleiter- oder Solartechnologie eingesetzt, bei der die dünnen Scheiben mit der Technik des Trennläppens von Einkristallstäben oder Gießblöcken abgetrennt werden. Bei einer Ausgestaltung dieser Technik wird ein mehrere Kilometer langer Draht so über ein Spulensystem geführt, dass ein Drahtgatter mit bis zu mehreren hundert nebeneinander liegenden Drähten entsteht. Damit lassen sich unter Zugabe der Zerspanungssuspension in einem Arbeitsgang aus einem entsprechend langen Block oder Stab mehrere hundert dünne Scheiben gleichzeitig sägen. Die eingesetzten Zerspanungssuspensionen setzen sich aus einem Kühlschmierstoff - bevorzugt mehrwertige Alkohole oder hoch raffiniertes Mineralöl mit Additiven - mit einem darin suspendierten Schneidkorn, bevorzugt Siliziumkarbid (SiC) in unterschiedlichen Korngrößen, zusammen. Während der mechanischen Bearbeitung des Siliziums oder des Quarzes wird das in der Zerspanungssuspension enthaltene Schneidkorn mit Hilfe der Bearbeitungswerkzeuge, wie beispielsweise Bandsägen, Drahtsägen oder Läppscheiben, an den Ort transportiert und gedrückt, an dem es seine zerspanende Wirkung entfalten soll.

Die für den Bearbeitungsprozess eingesetzte Suspension, die den anfallenden Abrieb enthält, wird gesammelt und erneut dem Bearbeitungsprozess zugeführt. Mit zunehmender Gebrauchsdauer nimmt allerdings die Wirksamkeit der Zerspanungssuspension ab, so dass sie schließlich ausgetauscht werden muss, weil das gestellte Bearbeitungsziel mit der gebrauchten Zerspanungssuspension nicht mehr zu erreichen ist. Die Ursache hierfür liegt neben dem Verschleiß des SiC vor allem im steigenden Anteil an feinpartikulärem Abrieb aus Silizium oder Quarz sowie an Eisenabrieb der Bearbeitungswerkzeuge. Die Spanne einer typischen Zusammensetzung derartiger gebrauchter Suspensionen ist in Tabelle 1 dargestellt.

**Tabelle 1:**

| Typische Zusammensetzung von Zerspanungssuspensionen aus dem Sägeprozess von Siliziumscheiben | |
|---|---|
| Komponente | Anteil [Massen-%] |
| Siliziumkarbid | 20-70 |
| Kühlschmierstoff | 20-70 |
| Silizium | 0-20 |
| Metallabrieb | 0-10 |

### Stand der Technik

Für die Weiterverarbeitung einer gebrauchten Zerspanungssuspension sind derzeit nur wenige Verfahren bekannt, so dass die Zerspanungssuspensionen in der Praxis häufig der Sonderabfallverbrennung zugeführt werden müssen.

Es gibt zwar verschiedene Möglichkeiten, die Einsatzdauer, d.h. die Anzahl der möglichen Schnitte pro kg Suspension, zu erhöhen. Hierfür kann beispielsweise eine Teilmenge der gebrauchten Zerspanungssuspension nach jedem Schnitt durch frische Zerspanungssuspension ersetzt, oder ein Teil des Abriebes durch Dekantieren von der Suspension abgetrennt werden. Bei allen diesen Verfahren muss jedoch die gebrauchte Zerspanungssuspension nach einer mehr oder weniger großen Zahl von Schnitten beseitigt werden. Dies erfolgt in der Regel über die Beseitigung als Sonderabfall durch Verbrennung mit anschließender Deponierung des Rückstands.

Da die Kosten für die Bereitstellung der Zerspanungssuspension einen großen Teil der Gesamtkosten der mechanischen Bearbeitung von Silizium, Quarz oder Keramik bilden, ist diese verbreitete Praxis der Beseitigung nicht wirtschaftlich.

Aus den Patent Abstracts of Japan zu JP 1-316170 ist ein Verfahren bekannt, bei dem gebrauchte Zerspanungssuspensionen zentrifugiert und die dadurch abgetrennten Schleif- bzw. Schneidkörner in frischem Kühlschmierstoff redispergiert werden. Nachteiligerweise bleibt jedoch bei diesem Verfahren noch ein hoher Anteil an Abrieb sowie an gebrauchtem Kühlschmierstoff in den abgetrennten Schneidkörnern. Eine scharfe Abtrennung zwischen dem Schneidkorn und dem Abrieb ist mit diesem Verfahren daher nicht möglich, so dass auch die Möglichkeiten der Wiederverwertung der Bestandteile der Zerspanungssuspension. sehr stark eingeschränkt sind.

Aus der EP 0916463A1 ist ein weiteres Verfahren zum Fraktionieren einer Zerspanungssuspension bekannt. Bei diesem Verfahren wird die Suspension zunächst durch destillative Trocknung in eine Fest- und eine Flüssigkomponente aufgetrennt. Anschließend wird ein Klassierverfahren, insbesondere ein Sieb- oder Sichtverfahren, zur Auftrennung der trockenen Festkomponente in eine Abrieb-Feinfrakton und eine Schneidkorn-Grobfraktion eingesetzt. Im Anschluss an diese Trockenklassierung kann die Schneidkorn enthaltende Fraktion wieder in einer Zerspanungssuspension verwendet werden. Nachteiligerweise verbleiben bei dem Trocknungsschritt jedoch die schwerflüchtigen Additive des Kühlschmier-stoffs in der Festkomponente. Außerdem sind auch im bevorzugten Vakuumbetrieb für die erfolgreiche Trocknung des Feststoffes Temperaturen erforderlich, die den Kühlschmierstoff durch Zersetzung schädigen können. Ein Wiedereinsatz des Kühlschmierstoffs ist dann ausgeschlossen. Durch die anschließende trockene Klassierung können zudem unerwünschte Agglomerate aus Feinstpartikeln in die wiederverwertete Grobfraktion überführt werden. Ursache hierfür sind Reste der Kühlschmierstoffe, welche die Partikel verkleben.

Eine scharfe Trennung zwischen den in Zerspanungssuspensionen enthaltenen Fraktionen kann dieses Verfahren daher ebenfalls nicht leisten. Eine erfolgreiche Fraktionierung stellt jedoch die Voraussetzung für eine hochwertige Verwertung und für einen Wiedereinsatz der Komponenten dar. Gerade im Falle einer angestrebten Verwertung von verbrauchtem SiC im Bereich der Keramik- oder Schleifkörperherstellung ist eine scharfe Abtrennung von Siliziumund Metallabrieb erforderlich. Mit den bekannten Verfahren nach Stand der Technik lässt sich diese Trennung bisher nicht erreichen.

Bei einem weiteren bekannten Verfahren der US 3,997,359 zur Abtrennung von einzelnen Bestandteilen aus einer Zerspanungsflüssigkeit erfolgt die Trennung zwischen Abrieb und Schneidkorn erst nach einer Abtrennung des Kühlschmierstoffes durch mehrere Waschvorgänge mit einem anschließenden Trocknungsschritt, so dass die oben beschriebenen Probleme auftreten können.

Die EP 0 786 317 A2 beschreibt ein gattungsgemäßes Verfahren zur Aufbereitung von gebrauchten Bearbeitungsflüssigkeiten, wie Kühlschmierstoffen, mit dem das Schneidkorn von der Bearbeitungsflüssigkeit abgetrennt werden kann. Bei dem Verfahren wird der öligen Bearbeitungsflüssigkeit zunächst Wasser zugegeben, um die Viskosität der Bearbeitungsflüssigkeit durch Bildung einer Öl/Wasser-Emulsion zu erniedrigen. Anschließend wird in einer Nassklassierung das Schneidkorn von der flüssigen Phase bestehend aus Öl, Wasser und Abrieb, abgetrennt. Auch mit einem derartigen Verfahren wird jedoch nicht die angestrebte scharfe Trennung des Schneidkorns von Abrieb und Kühlschmierstoff erreicht.

Das Patent Abstract zur JP 09-109144 beschreibt ein Verfahren zum Fraktionieren einer Zerspanungssuspension, bei dem der Zerspanungssuspension zunächst Kerosin als Extraktionsmittel zur Erniedrigung der Viskosität zugeführt wird, um das Schneidkorn vom Kühlschmierstoff in einem Nassklassierverfahren abzutrennen. Bei dieser Druckschrift geht es um die saubere Abtrennung des Schneidkorns vom Kühlschmierstoff, nicht jedoch um die Wiedergewinnung des Kühlschmierstoffes in qualitativ hochwertiger Form, wie sie beispielsweise für die Wiederverwendung beim Sägen erforderlich ist.

Die Aufgabe der vorliegenden Erfindung besteht darin, ein Verfahren zum Fraktionieren einer Zerspanungssuspension anzugeben, mit dem das Schneidkorn zuverlässig und scharf von Abrieb und Kühlschmierstoff getrennt werden kann, um eine erfolgreiche Wiederverwertung der einzelnen Bestandteile der Zerspanungssuspension zu ermöglichen.

### Darstellung der Erfindung

Die.Aufgabe wird mit dem Verfahren nach Anspruch 1 gelöst. Vorteilhafte Ausgestaltungen und Weiterbildungen des Verfahrens sind Gegenstand der Unteransprüche.

Beim erfindungsgemäßen Verfahren wird zunächst in Abhängigkeit vom vorliegenden Kühlschmierstoff und Materialabrieb ein flüssiger Hilfsstoff zur Erniedrigung der Viskosität ausgewählt, der mit dem Kühlschmierstoff eine einphasige Mischung eingeht (d.h. mischbar ist), die wiederum mit dem Abrieb eine Suspension bildet. Der Fachmann ist in der Lage, aus der Klasse der mit dem Kühlschmierstoff mischbaren Hilfsstoffe die auszuwählen, die eine derartige Mischung bzw. Suspension bilden. Hierzu steht eine Vielzahl von als Extraktionsmittel bekannten Flüssigkeiten zur Verfügung.

Die Zerspanungssuspension wird schließlich unter Einsatz des ausgewählten Hilfsstoffes in einem Nassklassierer, beispielsweise einem Aufstromklassierer, aufgetrennt, wobei sich das Schneidkorn als Grobfraktion abziehen lässt und ein grosser Teil des Abriebs suspendiert in der Mischung aus Kühlschmierstoff und Hilfsstoff als Feinfraktion abgezogen werden kann. Anschließend wird der flüssige Hilfsstoff vom Kühlschmierstoff durch ein destillatives Verfahren abgetrennt.

Bei diesem Verfahren spielt die Wahl eines flüssigen Hilfsstoffes eine wichtige Rolle, dessen Mischung mit dem Kühlschmierstoff eine stabile Suspension mit dem Abrieb bildet, nicht jedoch mit dem Schneidkorn. Bei konventionellen Verfahren zur extraktiven Abtrennung von Kühlschmierstoffen aus gebrauchten Suspensionen, Abfällen und Schlämmen wird die Auswahl des Lösemittels bisher alleine durch dessen Kapazität und Selektivität gegenüber dem zu lösenden Kühlschmierstoff bestimmt.

Für das erfindungsgemäße Verfahren wird hingegen die Eigenschaft ausgenutzt, dass einige Kühlschmierstoff-Hilfsmittel-Mischungen stabile Suspensionen mit dem vom bearbeiteten Material stammenden Abrieb - also im Falle der Siliziumverarbeitung mit den Siliziumpartikeln - ausbilden. Unter Mischung wird hierbei ein einphasiges System (homogenes Gemisch) verstanden. So ist nach Zugabe von Hilfsstoffen, insbesondere Lösemitteln, die mit dem Kühlschmierstoff mischbar sind, und nach Vermischen derselben mit der Zerspanungssuspension zu erkennen, dass aufgrund der Erniedrigung der Viskosität eine Auftrennung der Suspension in ein Sediment und in einen Überstand erfolgt, wobei der Kühlschmierstoff weitgehend in den Überstand überführt ist.

Überraschenderweise hat sich hierbei gezeigt, dass bestimmte Hilfsstoff-Kühlschmierstoff-Mischungen eine stabile Suspension mit dem in der zerspanungssuspension enthaltenen Abrieb, wie dem Silizium-Abrieb, ausbilden und andere Mischungen dies nicht tun. Die gebildeten stabilen Suspensionen bestehen hierbei über mehrere Wochen, ohne eine vollständige Sedimentierung des Abriebs zu erhalten.

Dieser Effekt des Suspendierens von Materialabrieb in der Hilfsstoff-Kühlschmierstoff-Mischung wird beim erfindungsgemäßen Verfahren in vorteilhafter Weise für eine effiziente Abtrennung des vom bearbeiteten Material stammenden Abriebs vom Schneidkorn in Verbindung mit einer Nassklassierung ausgenutzt. Die benötigte Flüssigkeitsmenge des Hilfsstoffes im Nassklassierer zur effizienten Abtrennung des Kühlschmierstoffes und des vom bearbeiteten Material stammenden Abriebs von der klassierten Schneidkornfraktion wird dadurch minimiert.

Ein für das erfindungsgemäße Verfahren geeigneter Hilfsstoff, vorzugsweise ein Lösemittel, überführt somit bereits in einer einstufigen Immersionsextraktion sowohl den Kühlschmierstoff als auch den vom bearbeiteten Material stammenden Abrieb in den Überstand und belässt dabei das Schneidkorn annähernd vollständig im Sediment. Somit gelingt bei nur geringem Lösemitteleinsatz in Verbindung mit einem Nassklassierer eine vollständige Abtrennung des vom bearbeiteten Material stammenden Abriebs von der Schneidkornfraktion. Die Schneidkornfraktion kann als Grobfraktion abgezogen, ggf. durch eine weitere Klassierung und/oder durch eine Magnetabscheidung von Metallpartikeln befreit und nach Abtrennung des Lösemittels wieder in den Prozess zurückgeführt werden.

Sollte die Kornform der Schneidkornfraktion, insbesondere bei Fehlen von scharfen Schneidkanten nach mehrfacher Verwendung, einen Einsatz als Schneidkorn nicht mehr zulassen, so kann durch die erfolgte scharfe Trennung zwischen Schneidkorn, Kühlschmierstoff, Abrieb und Metall eine stoffliche Verwertung auf einem anderen Gebiet erfolgen. So bietet sich beispielsweise für ein Schneidkorn aus SiC der Einsatz als hochpreisiger Rohstoff für Industriekeramik oder für spezielle Schleifkörper an. Eine derartige Verwertung für SiC-Fraktionen aus Zerspanungssuspensionen ist mit den Aufbereitungsverfahren nach dem Stand der Technik aufgrund der mangelhaften Auftrennung nicht durchführbar.

Ein wesentlicher Vorteil des erfindungsgemäßen Verfahrens besteht in der scharfen Abtrennbarkeit des Schneidkorns sowohl von Kühlschmiermittel als auch von Abrieb. Durch das Verfahren gelingt es, im Gegensatz zu allen bislang bekannten Verfahren, Zerspanungssuspensionen, die zur Bearbeitung von Silizium, Quarz oder Keramik nicht mehr nutzbringend verwendet werden können, in die stofflichen Fraktionen Schneidkorn, bearbeitetes Material, Metallabrieb und Kühlschmierstoff sauber aufzutrennen. Erst diese Fraktionierung stellt die Voraussetzung für eine stoffliche Verwertung dar.

Vorteilhafterweise lassen sich in der Regel alle Fraktionen der gebrauchten Zerspanungssuspension verwerten, die durch das erfindungsgemäße Verfahren aufgetrennt erhalten werden.

Beispiele für Hilfsstoffe mit den für die Durchführung des erfindungsgemäßen Verfahrens erforderlichen Eigenschaften sind im Falle von Kühlschmierstoffen auf Basis von Mineralöl lipophile Lösemittel, vorzugsweise Hexan, Heptan o.ä. Bei Kühlschmierstoffen auf Basis von mehrwertigen Alkoholen bilden insbesondere amphiphile Lösemittel, vorzugsweise Aceton o.ä., eine stabile Suspension aus, die überwiegend den vom bearbeiteten Material stammenden Abrieb enthält.

Als Nassklassierer werden vorzugsweise Aufstromklassierer oder Zentrifugalklassierer eingesetzt.

In einer vorteilhaften Weiterbildung des Verfahrens kann ergänzend zur Nassklassierung eine Fe-Metallabscheidung erfolgen, die vorzugsweise mit einer bekannten Vorrichtung zur magnetischen Metallabscheidung in flüssigen Systemen ausgeführt wird. Diese kann sowohl in den Klassierer integriert werden als auch zur Aufreinigung einer abgezogenen Fraktion ausserhalb des Klassierers angebracht sein. Durch diese Zusatzbehandlung kann eine Reinheit von SiC als Schneidkorn erreicht werden, die eine Verwertung des SiC sowohl im originären Prozess als auch für Industriekeramik und Schleifkörper ermöglicht.

Von der aus dem Nassklassierer erhaltenen Suspension der Hilfsstoff-Kühlschmierstoff-Mischung wird der flüssige Hilfsstoff durch ein destillatives Verfahren abgetrennt. Die Abtrennung der Feststoffe aus der Flüssigkeit kann beispielsweise durch mechanische Trennverfahren wie Filtration, Separation oder Kombinationen aus diesen Verfahren erfolgen. Es ist aber auch möglich, zunächst den Hilfsstoff bzw. das Lösemittel z.B. destillativ abzutrennen und dann die verbleibende Kühlschmierstoff-Abrieb-Mischung mit einem weiteren Lösemittel zu versetzen, das zwar eine Mischung mit dem Kühlschmierstoff, jedoch keine Suspension mit den Abriebpartikeln ausbildet. Im Falle von Kühlschmierstoff auf Basis von Mineralöl eignet sich hierfür z.B. ein amphiphiles Lösemittel wie Aceton. Der Abrieb kann dann sehr einfach mechanisch abgetrennt werden.

Eine Variation des beschriebenen Verfahrens kann durch eine Vorbehandlung der Zerspanungssuspension zur Reduktion des Kühlschmierstoff-Gehaltes erreicht werden. Hierzu wird die Zerspanungssuspension zunächst mit einem Lösemittel behandelt, das keine stabile Suspension mit dem vom bearbeiteten Material stammenden Abrieb und dem Kühlschmierstoff ausbildet. Die anfallende Mischung aus Kühlschmierstoff und Lösemittel kann dann nach einer einfachen Filtration durch eine Destillation wieder in Kühlschmierstoff und Lösemittel aufgetrennt werden.

Das erfindungsgemäße Verfahren lässt sich auf alle bekannten Zerspanungssuspensionen zur mechanischen Bearbeitung von sprödhartem Material wie Silizium, Quarz oder Keramik anwenden, in denen das Schneidkorn in einem Kühlschmierstoff dispergiert vorliegt.

Das Verfahren ist jedoch auch auf Zerspanungssuspensionen anwendbar, die bei der mechanischen Bearbeitung von anderen Materialien anfallen. Während eine Abtrennung von ferromagnetischen Materialien in der Regel keine Probleme bereitet, liegt der besondere Vorteil des erfindungsgemäßen Verfahrens vor allem in der guten Abtrennbarkeit von nicht ferromagnetischen Materialien vom Schneidkorn. Hierbei ist es selbstverständlich unerheblich, ob der Abrieb vom bearbeiteten Material oder vom Bearbeitungswerkzeug stammt.

Die auf dem Hauptanwendungsgebiet des Verfahrens vorliegenden gebrauchten Zerspanungssuspensionen, die bei der mechanischen Bearbeitung von Silizium, Quarz oder Keramik anfallen, bestehen aus dem Kühlschmierstoff, in dem das Schneidkorn sowie der vom bearbeiteten Material und vom Bearbeitungswerkzeug, beispielsweise einer Drahtsäge, stammende Abrieb dispergiert sind. Als Schneidkorn werden hierbei Hartstoff-Partikel, beispielsweise aus Aluminiumoxid, Siliziumoder Borcarbid verwendet, deren mittlere Korndurchmesser vorzugsweise im Bereich von 3 bis 50 µm liegen.

Im Folgenden wird die Fraktionierung einer Zerspanungssuspension, die beim Trennläppen von Silizium anfällt, an einem Beispiel dargestellt. Die nach dem Trennläppen vorliegende Zerspanungssuspension enthält im vorliegenden Beispiel Massenanteile von etwa 55% SiC als Schneidkorn, ca. 30% hochraffiniertem Mineralöl als Kühlschmierstoff, ca. 12% Siliziumabrieb und ca. 3% Fe-Metallabrieb.

Die Zerspanungssuspension wird einem Aufstromklassierer zugeführt, der mit Hexan als für dieses System geeignetem Hilfsstoff betrieben wird. Das Verhältnis Suspension zu Hexan beträgt etwa 1:2. Als Grobfraktion wird eine Schneidkornfraktion abgezogen, die zu 95% aus SiC besteht.

Die Auftrennung zwischen dem Silizium-Abrieb und dem Schneidkorn aus SiC ist bereits beim Nassklassierungsschritt so gut, dass keine weiteren Trennungsschritte zwischen diesen Bestandteilen erforderlich sind. So enthält die Schneidkornfraktion in diesem Beispiel nur einen Anteil von weniger als 2% an Silizium-Abrieb.

Die Grobfraktion des Schneidkorns wird durch eine Magnetabscheidung in bekannter Weise von Fe-Metallpartikeln befreit. Der Gehalt an SiC beträgt nach dieser Behandlung etwa 98%.

## Patentansprüche

1. Verfahren zum Fraktionieren einer Zerspanungssuspension, bestehend aus einem Kühlschmierstoff, in dem zumindest Schneidkorn sowie Abrieb eines Materials dispergiert sind, mit folgenden Schritten:
- Nassklassieren der Zerspanungssuspension unter Einsatz eines flüssigen Hilfsstoffes zur Erniedrigung der Viskosität in einem Nassklassierer, wobei ein flüssiger Hilfsstoff eingesetzt wird, der mit dem Kühlschmierstoff eine einphasige Mischung eingeht, die mit dem Abrieb eine Suspension bildet;
- Austragen einer oder mehrerer Schneidkorn enthaltender Fraktionen sowie von Kühlschmierstoff und Hilfsstoff aus dem Nassklassierer; und
- Abtrennen des flüssigen Hilfsstoffes vom Kühlschmierstoff durch ein destillatives Verfahren.

2. Verfahren nach Anspruch 1,
**dadurch gekennzeichnet,**
**dass** bei Vorliegen eines aus Alkoholen gebildeten Kühlschmierstoffes eine amphiphile Flüssigkeit als flüssiger Hilfsstoff eingesetzt wird.

3. Verfahren nach Anspruch 1,
**dadurch gekennzeichnet,**
**dass** bei Vorliegen eines auf Basis von Kohlenwasserstoffen gebildeten Kühlschmierstoffes eine lipophile Flüssigkeit als flüssiger Hilfsstoff eingesetzt wird.

4. Verfahren nach einem der Ansprüche 1 bis 3,
**dadurch gekennzeichnet,**
**dass** eine oder mehrere Metallabrieb eines Bearbeitungswerkzeuges enthaltende Fraktionen aus dem Nassklassierer ausgetragen werden.

5. Verfahren nach Anspruch 4,
**dadurch gekennzeichnet,**
**dass** der Metallabrieb mit einem Magnetabscheider abgetrennt wird.

6. Verfahren nach einem der Ansprüche 1 bis 5,
**dadurch gekennzeichnet,**
**dass** Metallabrieb eines Bearbeitungswerkzeuges in der bzw. den abgetrennten Schneidkorn enthaltenden Fraktionen durch eine Nachbehandlung dieser Fraktionen durch ein Klassierverfahren und/oder ein Magnetabscheideverfahren abgetrennt wird.

7. Verfahren nach einem der Ansprüche 1 bis 6,
**dadurch gekennzeichnet,**
**dass** die abgetrennte(n) Schneidkorn enthaltende(n) Fraktion(en) und/oder Metallabrieb enthaltende Fraktionen getrocknet werden, und bei der Trocknung verdampftes flüssiges Hilfsmittel kondensiert und gegebenenfalls in den Nassklassierer zurückgeführt wird.

8. Verfahren nach einem der Ansprüche 1 bis 7,
**dadurch gekennzeichnet,**
**dass** Feststoffe mechanisch aus der Mischung aus Kühlschmierstoff und Hilfsstoff mit dem darin suspendierten Abrieb abgetrennt werden.

9. Verfahren nach einem der Ansprüche 1 bis 8,
**dadurch gekennzeichnet,**
**dass** der durch ein destillatives Verfahren vom Kühlschmierstoff abgetrennte flüssige Hilfsstoff in den Nassklassierer zurückgeführt wird.

10. Verfahren nach einem der Ansprüche 1 bis 9,
**dadurch gekennzeichnet,**
**dass** das Nassklassieren über eine Aufstrom- oder Zentrifugaltechnik erfolgt.

11. Verfahren nach einem der Ansprüche 1 bis 10,
**dadurch gekennzeichnet,**
**dass** die Zerspanungssuspension zur Reduktion des Kühlschmierstoff-Gehaltes vor der Nassklassierung zunächst mit einem Lösemittel vermischt wird, das mit dem Kühlschmierstoff eine Mischung eingeht, die keine Suspension mit dem vom bearbeiteten Material stammenden Abrieb bildet, wobei die Mischung anschließend teilweise abgefiltert und das Lösemittel durch Destillation wieder von der Zerspanungssuspension getrennt wird.

## Claims

1. Method for fractionating a machining suspension, comprising a cutting fluid, in which at least cutting grain and dust of a material are dispersed, having the following steps:
- wet classification of the machining suspension using a liquid auxiliary agent in order to reduce the viscosity in a wet classifier, a liquid auxiliary agent being used which forms a monophase mixture with the cutting fluid, said mixture forming a suspension with the dust;
- discharge of one or more fractions containing cutting grain and of cutting fluid and auxiliary agent from the wet classifier; and
- separation of the liquid auxiliary agent from the cutting fluid by a distillation method.

2. Method according to claim 1,
**characterised in that**
an amphiphilic liquid is used as liquid auxiliary agent in the case of a cutting fluid formed from alcohols.

3. Method according to claim 1,
**characterised in that**
a lipophilic liquid is used as liquid auxiliary agent in the case of a cutting fluid formed on the basis of hydrocarbons.

4. Method according to one of the claims 1 to 3,
**characterised in that**
one or more fractions containing metal dust of a machining tool are discharged from the wet classifier.

5. Method according to claim 4,
**characterised in that**
the metal dust is separated with a magnetic separator.

6. Method according to one of the claims 1 to 5,
**characterised in that**
metal dust of a machining tool in the fraction or fractions containing the separated cutting grain is separated by a subsequent treatment of these fractions by a classification method and/or a magnetic separation method.

7. Method according to one of the claims 1 to 6,
**characterised in that**
the separated fraction(s) containing cutting grain and/or fractions containing metal dust are dried and, during drying, evaporated liquid auxiliary agent is condensed and if necessary returned into the wet classifier.

8. Method according to one of the claims 1 to 7,
**characterised in that**
solid materials are separated mechanically from the mixture comprising cutting fluid and auxiliary agent with the dust suspended therein.

9. Method according to one of the claims 1 to 8,
**characterised in that**
the liquid auxiliary agent, which is separated from the cutting fluid by a distillation method, is returned into the wet classifier.

10. Method according to one of the claims 1 to 9,
**characterised in that**
the wet classification is effected via an upstream or centrifugal technique.

11. Method according to one of the claims 1 to 10,
**characterised in that**,
in order to reduce the cutting fluid content before wet classification, the machining suspension is mixed firstly with a solvent which forms a mixture with the cutting fluid, said mixture not forming a suspension with the dust which stems from the machined material, the mixture being subsequently partially filtered off and the solvent being separated again from the machining suspension by distillation.

## Revendications

1. Procédé permettant le fractionnement d'une suspension d'usinage, constituée d'un lubrifiant, dans lequel sont dispersés au moins des grains de coupe ainsi que les déchets d'abrasion d'une matière, comportant les étapes suivantes :
- classification par voie humide de la suspension d'usinage en utilisant un adjuvant liquide pour abaisser la viscosité dans un classificateur par voie humide, dans lequel on utilise un adjuvant liquide qui, avec le lubrifiant, forme un mélange à une phase qui forme une suspension avec les déchets d'abrasion ;
- évacuation hors du classificateur par voie humide d'une ou plusieurs fractions contenant des grains de coupe ainsi que de lubrifiant et d'adjuvant, et
- séparation de l'adjuvant liquide du lubrifiant par distillation.

2. Procédé selon la revendication 1,
**caractérisé en ce qu'**
on utilise un liquide amphiphile comme adjuvant liquide en présence d'un lubrifiant formé à partir d'alcools.

3. Procédé selon la revendication 1,
**caractérisé en ce qu'**
on utilise un liquide lipophile en tant qu'adjuvant liquide en présence d'un lubrifiant formé à base d'hydrocarbures.

4. Procédé selon l'une quelconque des revendications 1 à 3,
**caractérisé en ce qu'**
on évacue du classificateur par voie humide une ou plusieurs fractions contenant des déchets d'abrasion métalliques d'un outil d'usinage.

5. Procédé selon la revendication 4,
**caractérisé en ce que**
les déchets d'abrasion métalliques sont séparés avec un séparateur magnétique.

6. Procédé selon l'une quelconque des revendications 1 à 5,
**caractérisé en ce qu'**
on sépare les déchets d'abrasion métalliques d'un outil d'usinage dans la ou les fractions contenant les grains de coupe séparés à l'aide d'un post-traitement de ces fractions avec un procédé de classification et/ou un procédé de séparation magnétique.

7. Procédé selon l'une quelconque des revendications 1 à 6,
**caractérisé en ce qu'**
on sèche la (les) fraction(s) séparé(es) contenant les grains de coupe et/ou les fractions contenant les déchets d'abrasion métalliques et on condense l'adjuvant liquide vaporisé lors du séchage et, le cas échéant, on le réintroduit dans le classificateur par voie humide.

8. Procédé selon l'une quelconque des revendications 1 à 7,
**caractérisé en ce qu'**
on sépare mécaniquement les substances solides du mélange constitué du lubrifiant et de l'adjuvant avec les déchets d'abrasion en suspension dans celui-ci.

9. Procédé selon l'une quelconque des revendications 1 à 8,
**caractérisé en ce qu'**
on réintroduit l'adjuvant liquide, séparé du lubrifiant par distillation, dans le classificateur par voie humide.

10. Procédé selon l'une quelconque des revendications 1 à 9,
**caractérisé en ce qu'**
on procède à la classification par voie humide avec un courant ascendant ou par centrifugation.

11. Procédé selon l'une quelconque des revendications 1 à 10,
**caractérisé en ce que**
pour réduire la teneur en lubrifiant, on mélange la suspension d'usinage, avant la classification par voie humide, d'abord avec un solvant qui forme, avec le lubrifiant, un mélange qui ne forme pas de suspension avec les déchets d'abrasion provenant de la matière à usiner, le mélange étant ensuite filtré en partie et le solvant étant de nouveau séparé de la suspension d'usinage par distillation.
